# EUROPEAN PATENT APPLICATION

(11) **EP 2 209 073 A1**
(43) Date of publication of application: **21.07.2010**
(21) Application number: 09175016.6
(22) Date of filing: 04.11.2009
(51) Int. Cl.: G06F 17/30

(54) **Location based system utilizing geographical information from documents in natural language**

(30) Priority: 15.01.2009 US 354094
(71) Applicant: ROBERT BOSCH GMBH, 70442 Stuttgart (DE)
(72) Inventor: Faenger, Jens, Santa Clara, CA 95054 (US); Fiechtner, Georg, 83646, Wackersberg (DE)
(74) Representative: Barth, Stephan Manuel

(57) **Abstract**

A method of operating a location-based system includes identifying geographic information within unstructured electronic text. The identified geographic information, which includes street information, address information, or names of locations is extracted. Candidate geographic locations to which the identified geographic information may refer are determined. One of the candidate geographic locations is selected. An alphanumeric representation of the selected geographic location is utilized in a location-based service. The invented system performs each of the preceding steps. The system supports the extraction of all locations mentioned in the unstructured text, applying the steps mentioned above.

## Description

### COPYRIGHT NOTICE

[0001] Portions of this document are subject to copyright protection. The copyright owner does not object to facsimile reproduction of the patent document as it is made available by the U.S. Patent and Trademark Office. However, the copyright owner reserves all copyrights in the software described herein and shown in the drawings. The following notice applies to the software described and illustrated herein: Copyright © 2008, Robert Bosch GmbH, All Rights Reserved.

### BACKGROUND

### 1. Field of the Invention.

The present invention relates to apparatuses and methods for providing data to a location-based system.

### 2. Description of the Related Art.

A typical location-based system may receive location data and use the data to create a display on an electronic map or to provide route guidance information within a vehicle. There are systems available today that are able to connect to the internet, access a limited number of internet data sources, such as web services, and use them to provide different location based services. These systems rely on transferring location data that exists in a format that is well known to the device. Usually the location data has to follow a standardized structure for the device to be able to recognize and use it. For example, there are standardized XML formats available that make it possible to encode location information. A variety of internet services offer information in these formats. Every device that supports these specific formats is able to use the location information offered by those internet services.

Systems based on this approach extract geographic information from sources that provide information in a very specific format. Such systems can handle only a limited set of data providers and are inflexible in the respect that they cannot handle location data residing in a range of different and changing formats. If formats change or new formats are to be supported by a system, then the system needs to be extended appropriately. This might take a lot of effort, and, for devices in the field, it is usually not possible at all.

Recent technology deals with making systems capable of supporting a great variety of structured data formats. The technology generalizes the approach of how to extract location information from structured data and how to integrate the processing needed for location-based services. One of the advantages of the technology is that it lets systems in the field access new data sources and it can deal with structural changes of data formats. Although this technology introduces flexibility in handling structured data formats, it does not address location information that exists in unstructured form, such as in text documents or internet pages with content and structure that is unknown to the systems.

There are approaches available today that are able to recognize a limited set of geographic information types in an unstructured textual resource. But those systems are not suited for location-based services because most of them only recognize locations of a geographic resolution on continent, country, state, and (major) city level. There is no system that allows the recognition of both coarse-grained geographic information, such as countries, states, etc., and fine-grained location information on street and address level at the same time. Access to all geographic information contained in a document, regardless of its geographic resolution, is crucial for navigation and other location-based services based on the information provided by the analyzed resource.

Unstructured content can be found everywhere on the internet, but cannot be autonomously accessed by location-based services and devices with the current state of the art. For this reason, a range of applications such as travel planning that would rely on access to information sources with rich but unstructured geographic content cannot be realized with the current state of the art.

In summary, the internet and other electronic sources may provide a great amount of data that includes location information relating to the names of places and their addresses in an unstructured format. What is neither disclosed nor suggested in the art is a location based system, such as a navigation system in car, a portable navigation system, or a cell phone, that can make use of this unstructured geographic data.

### SUMMARY

The present invention provides navigation systems with access to many kinds of geographic information such as addresses and points of interests which can be found in unstructured textual documents such as web pages. The functionality of the invention takes the burden of manual extraction and data input from the user. The device of the present invention can autonomously access location information derived from sources that previously were readable by only humans.

This invention may provide location-based devices that have internet connection with access to many kinds of geographic information such as addresses and points of interests which can be found in unstructured or semi-structured textual resources. The invention enables the recognition and extraction of location information from any document composed in natural language. This includes documents consisting purely of text, as well as semi-formatted documents like web pages or emails. The invention is able to extract all geographic information from those documents and use the information to offer location-based services such as route guidance through navigation systems and mobile phones.

The present invention makes the previously unusable unstructured data accessible to location-based systems. The invention enables the processing of unstructured, natural language in order to extract location information from it and to use the found locations for providing location-based services to the user. Since most of the content available nowadays on the internet is unstructured from a machine's point of view (human readable web pages, etc.), this approach opens up a great range of additional content to location-based systems.

In one embodiment, the present invention comprises a method of operating a location-based system, including identifying geographic information within unstructured electronic text. The identified geographic information, which, among others, includes street information, address information, and/or names of points of interest, etc., is extracted, Candidate geographic locations to which the identified geographic information may refer are determined. One of the candidate geographic locations is selected. An alphanumeric representation of the selected geographic location is utilized in a location-based service. The invented system performs each of the preceding steps.

In another embodiment, the present invention comprises a method of operating a location-based system, including manually selecting an internet web page. Geographic information within the web page is identified. The geographic information includes address information and/or a reference to a point of interest. The identified geographic information is extracted from the web page. The extracted geographic information is utilized in a navigation service and/or a map service. The steps of identifying, extracting and utilizing are performed automatically by the system of the invention.

In yet another embodiment, the present invention comprises a method of operating a location-based system, including identifying a plurality of portions of geographic information within unstructured electronic text. The identified portions of geographic information are extracted from the text. Candidate geographic locations to which one of the identified portions of geographic information may refer are determined. One of the candidate geographic locations is selected. The selecting is dependent upon other ones of the identified portions of geographic information. Geographic coordinates of the selected geographic location are ascertained. The geographic coordinates of the selected geographic location are utilized in a location-based service.

An advantage of the present invention is that it bridges the gap between unstructured content found on the internet and other sources and the functionality provided by location-based services.

Another advantage is that the present invention enables location-based systems to utilize many sources of unstructured geographical information.

### BRIEF DESCRIPTION OF THE DRAWINGS

The above mentioned and other features and objects of this invention, and the manner of attaining them, will become more apparent and the invention itself will be better understood by reference to the following description of an embodiment of the invention taken in conjunction with the accompanying drawings, wherein:

FIG. 1a is a sample of a geo-parsed travel- and tourist-related text taken from the web site wikitravel.org according to one embodiment of the invention;

FIG. 1b is a map visualization of the geo-coded location references taken from the text of FIG. 1a according to one embodiment of the invention;

FIG. 2 is a block diagram of one embodiment of a location-based arrangement of the invention; and

FIG. 3 is a flow chart of one embodiment of a method of the present invention for operating a location-based system.

Corresponding reference characters indicate corresponding parts throughout the several views. Although the drawings represent embodiments of the present invention, the drawings are not necessarily to scale and certain features may be exaggerated in order to better illustrate and explain the present invention. Although the exemplification set out herein illustrates embodiments of the invention, in several forms, the embodiments disclosed below are not intended to be exhaustive or to be construed as limiting the scope of the invention to the precise forms disclosed.

### DETAILED DESCRIPTION

The embodiments hereinafter disclosed are not intended to be exhaustive or limit the invention to the precise forms disclosed in the following description. Rather the embodiments are chosen and described so that others skilled in the art may utilize its teachings.

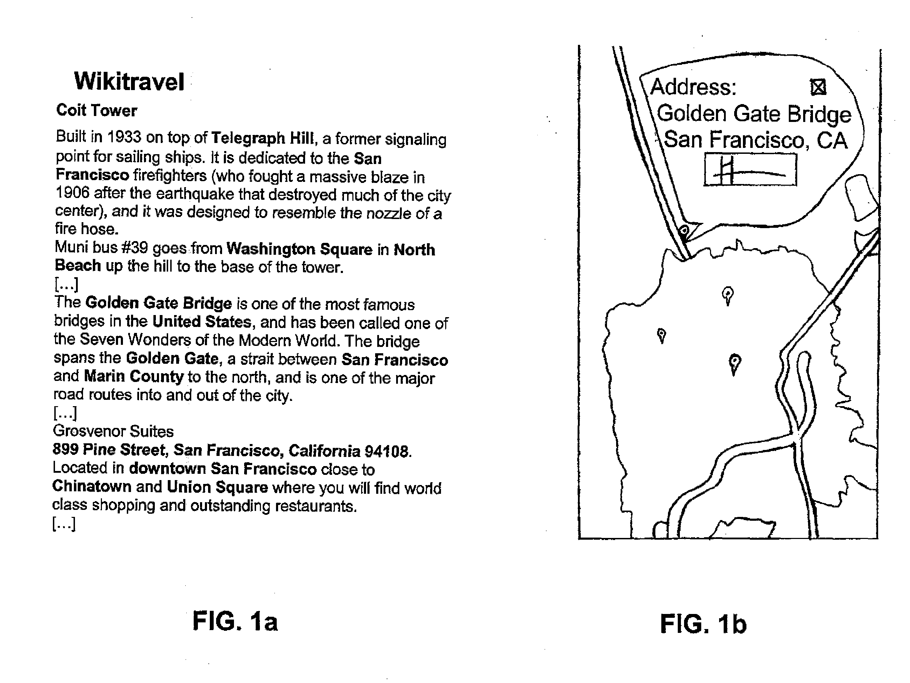

Sources of geographical information that may be used by the invention are, among others, online travel guides, travel reports, yellow pages, as well as business and private home pages that show (contact) addresses, etc. In addition, the invention makes it possible to process geographical information contained in emails and personal messages. FIG. 1a depicts an extract of a travel guide with valuable geographic information in bold font. FIG. 1a is a sample of a geo-parsed travel- and tourist-related text from the internet web site wikitravel.org. References recognized by the present invention as location references are depicted in bold font for illustration purposes herein. However, it is to be understood that these references are not necessarily provided in bold or any other unusual font by the web page. This geographic information may be recognized by the present invention despite being in an unstructured natural language text.

The device of the present invention extracts the geographic information and offers location-based services. The geographic content of the text of FIG. 1a may be used in many ways. For example, the device may present the locations on a map where the locations could be used for route guidance. This exemplary use case is shown in FIG. 1b, which depicts a visualization in a map of the geo-coded location references from the text of FIG. 1a. The geographical region of this particular visualization is the city of San Francisco.

The device of the invention may be able to extract geographic information of any geographic resolution. The geographic information may include geographic coordinates that denote a specific point location as well as geographic regions and geopolitical entities of any size (e.g., countries, states, counties, provinces, etc.). The geographic information may also include geographic features such as mountains, hills, lakes, rivers, etc., and populated places such as cities, towns, villages, neighborhoods, and districts. The inventive device may be able to find points of interest such as sights, airports, train stations, and geographic entities of cultural as well as historical importance. Moreover, the device may be able to recognize many kinds of traffic infrastructure such as highways, freeways, interstates, roads, streets, as well as bike and hiking trails and paths. In addition, the set of recognizable entities covered by the invention may include street addresses as well as full addresses, postal codes, and telephone numbers. Telephone numbers indirectly denote a geographic area or a specific point location (e.g., a hotel or restaurant).

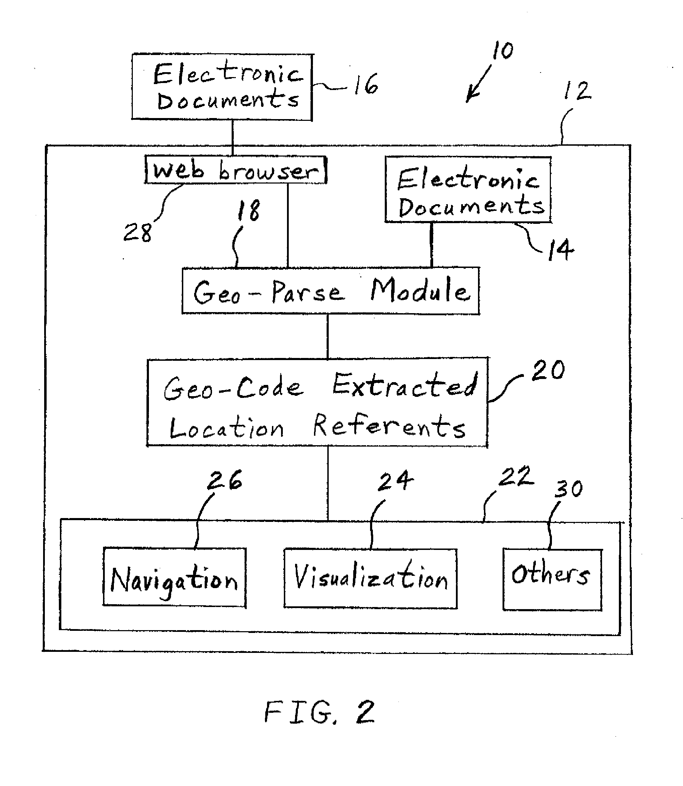

In order to detect geographic information, the invented system may perform several processing steps in a location recognition workflow. First, various linguistic methods may be applied to the unstructured text in order to isolate potential geographic locations. Then, the extracted location information may be geographically disambiguated and stored in a standardized data format. This inventive process may enable the device to be equipped with a variety of different location-based services that are enabled by the invention to make use of the analyzed geographic data. FIG. 2 illustrates a system workflow associated with one embodiment of a location-based arrangement 10 of the present invention.

A first processing step may be to retrieve the data that needs to be analyzed for location information. For this purpose, the inventive location-based device 12 may be able to access a range of unstructured and semi-unstructured documents that reside in different formats and at different locations. For example, the inventive device may access text documents 14 such as plain text TXT files, Adobe PDF, Microsoft Word documents, etc., which may be stored on the device itself. The device may also use speech recognition technologies (e.g., speech-to-text) to allow the user to input the content by talking to the system. Using a standard wireless or wired data connection, the device may also have access to information 16 stored outside the device such as web pages, emails, text messages, etc. That is, device 12 may have web browsing, emailing, and text messaging capability.

In addition to accessing web-based electronic documents that may be stored on web servers, device 12 may be able to access documents 16 on other devices, such as smart phones, laptops, etc. Standard communication and connection technology may be utilized to enable the inventive device to access such documents on smart phones, laptops, etc.

After the unstructured natural language document is fully available to the inventive device, the linguistic analysis phase of geo-parsing the document may begin within a geo-parse module 18. During this phase, the text may be broken down into sentences and single words. Linguistic parsing based on semantic and syntactic analysis may be applied to the document and sentence structure. As a result, a word type such as verb, noun, pronoun, named entity, etc. may be determined for every element of the document.

Based on this breakdown into structural elements, potential location referents 20 can be extracted from the text. This may be done by taking into account the word types and their textual order. Based on probability, it is, for instance, very unlikely that a verb is a location referent, whereas it is more likely that a named entity (i.e., a noun/word/name that does not relate directly to the grammar of the specific language) preceded by a preposition is a potential location referent.

Another method that may be applied by the invention uses location-indicating key words, such as "Canyon" in "Red Rock Canyon", "Street" in "Chestnut Street", "Mt." in "Mt. Whitney", etc. In one embodiment, the invention also takes into account that more complex location referents, such as full addresses, include parts such as street numbers, street names, postal codes, city names, etc. Telephone numbers and postal codes also denote locations and may be recognized in the geo-parsing process as well.

In order to achieve a feasible geo-parsing result, the invention may employ different approaches commonly used for the task of information extraction. Some such approaches are described in Eikvil, L. (1999), Information Extraction from World Wide Web - A Survey, Technical Report 945, Norwegian Computing Center, which is hereby incorporated by reference herein.

The invention may also employ information extraction techniques such as linguistic rule sets from the field of knowledge engineering. Some such linguistic rule sets are described in Cunningham, H., Wilks, Y., and Gaizauskas, R. (1996), GATE - A General Architecture for Text Engineering, which is hereby incorporated by reference herein. This approach employs a set of linguistic rules that are manually crafted by experienced linguists. These rules may be tuned for application in the present invention to enable extraction of location referents.

The invention may further employ automatic training, which may be supervised or unsupervised, Some techniques of automatic training are described in Nadeau, D., Turney, P., and Matwin, S. (2006), Unsupervised named-entity recognition: Generating gazetteers and resolving ambiguity, in Advances in Artificial Intelligence, pages 266-277, Springer Berlin, which is hereby incorporated by reference herein. Based on a certain amount of appropriate training data, a model may be trained that is used further on to extract location referents from previously unseen text.

The invention may further still employ a hybrid or combination of the linguistic rule sets and the automatic training described in the previous two paragraphs. Some such hybrid approaches are described in Mikheev, A., Grover, C., and Moens, M. (1998), Description of the LTG system used for MUC-7, which is hereby incorporated by reference herein. Linguistic rules may be used to collect a data set which the system may then be trained on. This approach may unify the flexibility of a machine-learning-based system with the high recognition rate of the less flexible knowledge engineering approach.

The linguistic parsing may make it possible to recognize location referents of any geographic resolution and of any form. Geographic referents can be either written out entirely (e.g., "100 Main Street", "San Francisco International Airport") or in abbreviated form (e.g., "100 Main", "San Francisco International" or "SFO"). Location synonyms may also be taken into account, such as "The Big Apple" (New York City) or "The Windy City" (Chicago).

The extracted geographic information may be geo-coded. The invention may extract location referents from the textual resource as well as further geographically disambiguate the location referents. This processing step may be referred to as "geo-coding" or "geospatial grounding" of location referents, and may result in the assignment of accurate geographic coordinates to referents. An overview over some existing geo-coding methods and heuristics is given in Leidner, J. L. (2007), Toponym Resolution in Text, PhD thesis, University of Edinburgh, which is hereby incorporated by reference herein.

The geo-coding step of the present invention may be based on the extracted location referents from the prior geo-parsing phase. In response to the fact that location names can be ambiguous, the invented system may first determine a set of possible candidates for each referent. There can be only one candidate for referents like "New York City" or "3157 Fillmore St, San Francisco, CA", but there can be several location candidates for referents such as "Georgia", "Springfield", or "100 Main Street". Based on different heuristics, the invention may weigh the location candidates. Some of these heuristics may assign weights depending on the geographical distance between candidates and a geographical center. This center may be determined by considering all locations mentioned in the document. Other heuristics rely on the textual context and the geographical distance to unambiguous referents as well as on the geographical relationship between location candidates. The geographic center of the candidate geographic locations may also be considered in selecting one of the candidate geographic locations.

During the above-described heuristic process, the inventive system may resolve location references like "Downtown" or "Chinatown" and assign them to a particular city mentioned somewhere in the text. The system may also complete partial addresses, such as "466 University Ave". Using this technique may make it possible to complete addresses, even when the parts of the address are scattered over several paragraphs in the document.

After the geographic information has been extracted and refined, it may be handed over to location-based services. The final output of the system may be a set of geographically grounded location referents which include fully qualified addresses and/or a set of geographical coordinates. These locations may be converted into a structured format, including geographic coordinates, understood by the location-based services offered by the device of the invention. Examples of geo-coded location referents that may be recognized by the system are "Coit Tower" → Coit Tower, San Francisco, USA (37.802650, -122.405720); "466 University Ave" → 466 University Avenue, Palo Alto, CA 94301, USA (37.44773,-122.159735); and "LAX" → Los Angeles International Airport, Los Angeles, USA (33.944080, - 118.408260).

The resulting location referents 20 may be handed over to location-based services 22 of the invention. For example, the inventive device may display the resulting location referents in a map visualization 24. Alternatively, a navigation module 26 of the inventive device may calculate a route to the resulting location referents.

Location-based services 22 may include other services 30 such as location-based games, geographic marketing services and mobile dating services, for example. More generally, other services 30 may include any electronic service that is dependent upon a location of the user or a location in which the user is interested.

All of the above-mentioned processing steps, including the geo-parsing and the geo-coding, can be performed either inside or outside the inventive device to accommodate for different device limitations. If performed outside of the device, a wireless or wired data connection may be established between the device and server. The device may send the geographic information resource to be processed to the server and may receive a set of geospatially grounded location referents back from the server once the processing has finished.

A number of different applications or use cases for the present invention will now be described. In a first use case, the invention is used for travel planning. For example, assume person A plans a trip to San Francisco on his computer. Further assume that person A has never been to San Francisco and therefore he tries to get more information about the city from the internet. After browsing for a while, he finds two information sources that provide valuable information about what to see, what to do, where to eat and stay, etc. The two information sources he finds to be useful are the web site wikitravel.org/en/San_Francisco and the official visitor web site of the city only in san francisco.com, both of which pertain to person A's place of interest, San Francisco.

What person A would normally do now according to the prior art is print out these web pages since their content cannot be autonomously accessed by his navigation system. He would then have to manually enter every location he would like to visit into the navigation device.

With the invention of the present invention, however, person A simply tells the device the internet addresses of the web pages he found while using his computer at home. This may be performed by either manually selecting the web pages by typing or copying the web page addresses into the device or, in another embodiment, the computer at home directly transmits the web page addresses to the device. Next, the device (which can be in the form of a navigation device, mobile phone, etc.) accesses the content of the web pages autonomously, processes them and makes a list of all mentioned locations available to the user. Now, user A is able to plan the trip directly on the device by selecting a destination out of the list of recognized locations. No manual input of desired locations by user A is needed with the present invention, as it is with the prior art. User A is able to navigate to particular points of interest mentioned in the sources, such as restaurants or hotels, or he can plan a trip from one point of interest to another. User A can plan a whole sightseeing tour without manually inputting location information.

In another use case, user A plans the trip on the inventive device itself using its built-in web browser. After he finds the web pages he is interested in, he uses a function of the web-browser that automatically transfers the web page address to the portions of the device that extract the location information. This additional functionality eliminates the burden of the user having to manually reenter the web page address.

In another use case involving travel planning, the invention is applied to personal travel reports and road trips. Assume that Traveler B is interested in a personal travel report about a road trip, an example of which may be found at the web page travelpod.com/travel-blog-entries/twittg/rtw/1127319060/tpod.html, and Traveler B wants to follow the author's foot steps. The inventive device may analyze the personal travel report and extract all valuable geographic information. Based on the order of textual appearance, Traveler B can follow the author on his trip and visit the same locations.

In yet another use case, the invention is used for personal location recommendation or notification. Assume a friend of user C has recently moved to a new location. The friend sends an email to user C inviting him to his house warming party. The inventive navigation system of user C extracts the mentioned address from the email and guides user C to his friend's new place.

A few days later, user C receives an email from a friend inviting him to a newly opened restaurant at the intersection of Middlefield Rd and University Ave. User C's inventive navigation device processes this email and guides user C to the restaurant at the intersection in Palo Alto, CA based on the fact that this is the only city where these streets intersect. In the case where an intersection exists in multiple cities (such as Chestnut Street & Main Street) the inventive navigation device may select the location closest to user C's current location. Additional strategies to deal with ambiguous locations may use further geographical information contained in the text to decide which location candidate was likely being referred to in the discourse.

In yet another use case of the present invention, a friend sends an email message asking to be picked up from "LAX". The inventive navigation device recognizes LAX as the common abbreviation of the Los Angeles International Airport. Based on this information and the user's current location, the navigation device calculates the route and the estimated arrival time at the airport.

In a further use case, the present invention may be used by a biker or hiker. Assume that user D likes to bike and hike. Therefore, user D often uses web sites such as traillink.com or trails.com to find new and interesting trails. The inventive navigation device is able to extract the trail or hiking paths from the web page and use them for route guidance purposes.

In a still further use case, a web browser is enriched with location tags. Assume user E uses a web browser running on the inventive device to browse travel-related sites. While displaying the content to user E, the device also recognizes the locations mentioned in the text. The device's web browser is extended in a way that it can make use of the recognized locations. For instance, the device's web browser may highlight the locations within the displayed web page and enable user E to select one of those highlighted locations. Upon user E making the selection, the browser may enable user E to choose from a range of location-based services for this location, such as displaying the location on a map or calculating a route to the location.

Another location-based service provided by the invention enables the user to get more information about a particular location. This can be, for instance, information about a restaurant or hotel. Based on the provided business name, the street address, or telephone number, the inventive system may look up additional information, such as user/guest reviews, descriptions on Wikipedia, the official homepage, etc. This information may be displayed within the browser or the information may be processed and displayed in a way more appropriate for a location-based device.

As described above, the invention may provide a mobile or non-mobile system that can utilize the large amount of geographic information available in unstructured electronic documents. The information embedded in such documents could not be processed by prior art systems in an automated way. The invention autonomously extracts location information and offers a range of location-based services for the found locations.

Another novel aspect of the invention is that users do not need to manually input into their device information that already exists on the internet or in other electronic documents. Rather the information is automatically extracted from the documents and is sent to the inventive device.

Yet another novel aspect of the invention is that no adaptation to changes in data formats and data sources is necessary. Since the system is independent of structured location information, changes to a data source do not negatively influence the processing.

A further novel aspect is that the inventive system is capable of recognizing and geospatially grounding location referents of any geographic resolution from continent level down to address level including street name and house number. Prior art systems are incapable of recognizing and geospatially grounding location referents below a certain geographic resolution.

A still further novel aspect is that the invention provides a content viewer such as a web-browser that highlights all geographic locations mentioned in an electronic text document. The content viewer further provides location-based services upon selection by the user of one of those locations.

A document can reside within device 12 or outside. If the documents reside outside, they can be accessed with browser 28 or using other means to transfer the document inside the device.

Step 302 identifies addresses, parts of addresses, names of points of interest, etc. All these descriptions are direct references to a geographic location. However, the geo-parse module 18 is also able to identify indirect references to locations, such as terms as "the bridge" or "spans the Golden Gate." If the textual context makes it clear, geo-parse module 18 sets those indirect references to relation with "Golden Gate Bridge".

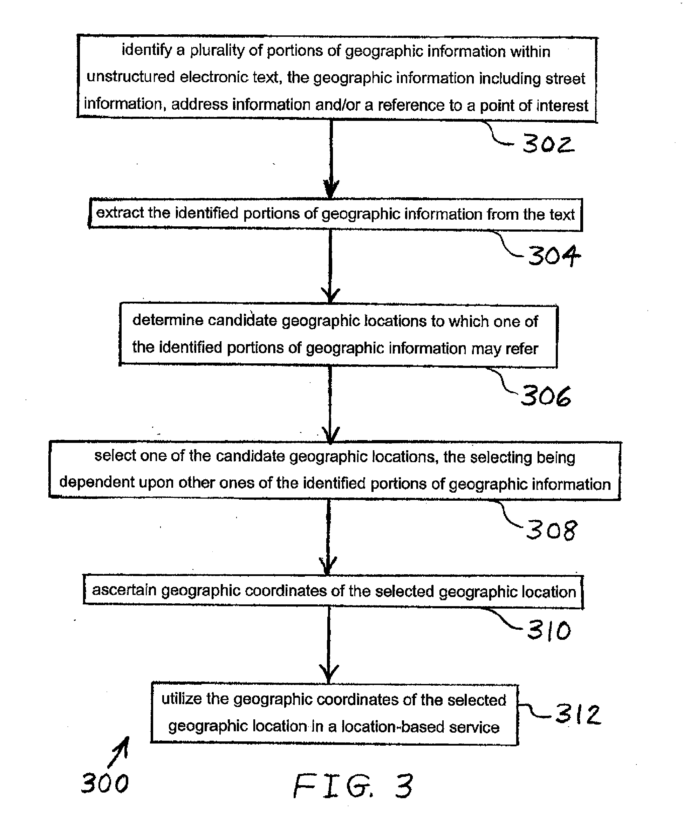

One embodiment of a method 300 of the present invention for operating a location based system is illustrated in FIG. 3. In a first step 302, a plurality of portions of geographic information within unstructured electronic text are identified. The geographic information includes street information, address information and/or a reference to a point of interest. For example, as shown in FIG. 1a, unstructured electronic text of a web page includes portions of geographic information that are indicated in bold font. Location-based device 12 may identify the portions of geographic information using the geo-parse module 18 (FIG. 2). The geographic information includes street information and address information in the form of "899 Pine Street," "Washington Square" and "Union Square." The geographic information includes references to points of interest, such as "Telegraph Hill," "Golden Gate Bridge" and "Chinatown."

Next, in step 304, the identified portions of geographic information are extracted from the text. That is, geo-parse module 18 extracts the above-described geographic information from the previously processed document.

In a next step 306, candidate geographic locations to which one of the identified portions of geographic information may refer are determined. The specific geographic locations referred to by certain identified portions of geographic information, such as "San Francisco," "United States" and "899 Pine Street, San Francisco, California 94108," may be clear. However, other identified portions of geographic information may be ambiguous as to which specific geographic location they refer to. Thus, a list of possible interpretations of this ambiguous geographic information is compiled by geo-code module 20. For example, "Washington Square," "Chinatown" and "Union Square" may all be ambiguous in that, considering each of these portions of geographic information in isolation, it may not be possible to determine to which specific geographic locations these portions of geographic information refer. This ambiguity may be due to the fact that each of "Washington Square," "Chinatown" and "Union Square" may be found in a multitude of cities in the world. Thus, device 12 may interact with the internet to compile a first list of cities having a "Washington Square;" a second list of cities having a "Chinatown;" and a third list of cities having a "Union Square." In addition, device 12 may consider the cities, counties and countries discussed in the same electronic document when compiling the list of candidate geographic locations. Other ambiguous geographic information may be on the county level, i.e., "Marin County," city level, i.e., "Springfield," or state level, i.e., "Georgia."

In step 308, one of the candidate geographic locations is selected. That means, geo-code module 20 disambiguates by selecting one candidate out of the list of ambiguous candidates. The selecting is dependent upon other ones of the identified portions of geographic information. For example, the list of candidate locations for "Washington Square" may include hundreds of cities around the world that have a "Washington Square." In order to select one of the candidate locations on the list, the other identified portions of geographic information on the list may be considered. That is, geo-code module 20 may consider that "San Francisco" is included four times in the other identified portions of geographic information in the electronic document. Geo-code module 20 may further consider that San Francisco is on the list of candidate locations, or may unambiguously be the sole candidate location, of other identified portions of geographic information in the electronic document, such as "North Beach" and "Golden Gate Bridge." Moreover, geo-code module 20 may further consider that San Francisco is adjacent to or near a candidate location for "Marin County," which is disposed across the Golden Gate body of water from San Francisco. Thus, geo-code module 20 may select the Washington Square in San Francisco as being the location referred to by "Washington Square" in the electronic document.

Next, in step 310, an alphanumeric representation in the form of geographic coordinates of the selected geographic location are ascertained. For example, by using some online map web site or a database stored within device 12, geographic coordinates of Washington Square in San Francisco may be ascertained. The geographic coordinates may be expressed in longitude and latitude, or in some other coordinate system. It is also possible for some other type of alphanumeric representation that uniquely identifies the location of the selected geographic location to be ascertained. The coordinates and also the complete address of the selected candidate are set into relation with the textual description in the document. This relation is necessary for some of the use cases, such as text highlighting in the browser.

In a final step 312, the geographic coordinates of the selected geographic location are utilized in a location-based service. For example, the geographic coordinates of the Golden Gate Bridge may be utilized in a location-based map service to visually indicate the location of the bridge, as shown in FIG. 1b.

While this invention has been described as having an exemplary design, the present invention may be further modified within the spirit and scope of this disclosure. This application is therefore intended to cover any variations, uses, or adaptations of the invention using its general principles. Further, this application is intended to cover such departures from the present disclosure as come within known or customary practice in the art to which this invention pertains.

## Claims

1. A method of operating a location-based system, wherein the location-based system performs the steps of:
identifying a plurality of portions of geographic information within unstructured electronic text;
extracting the identified portions of geographic information from the text; and
determining candidate geographic locations to which one of the identified portions of geographic information may refer.

2. The method of claim 1, comprising the further steps of:
selecting one of the candidate geographic locations, the selecting being dependent upon other ones of the identified portions of geographic information;
ascertaining geographic coordinates of the selected geographic location; and
utilizing the geographic coordinates of the selected geographic location in a location-based service.

3. The method of claim 2 wherein the unstructured electronic text is in an electronic document stored in the location-based system.

4. The method of claim 3 wherein the location-based system has emailing capability, the electronic document comprising an email.

5. The method of claim 2 wherein the location-based service is one of a navigation service and a map service.

6. The method of claim 2 wherein the selecting step is dependent upon a current location of the location-based system.

7. The method of claim 2 wherein the selecting step is dependent upon a geographic center of the candidate geographic locations.

8. The method of claim 1 wherein the text includes a plurality of locations, each of the locations being identified and extracted.

9. The method of claim 1 wherein the geographic information including at least one of street information, address information, and a name of a location.

10. The method of claim 9, comprising the further steps of:
automatically, by use of the system, selecting one of the candidate geographic locations; and
utilizing an alphanumeric representation of the selected geographic location in a location-based service.

11. The method of claim 10 wherein the selecting step is dependent upon a current location of the location-based system.

12. The method of claim 10 wherein the alphanumeric representation comprises a set of coordinates.

13. The method of claim 10 wherein the determining step includes determining candidate geographic locations to which the identified geographic information may possibly refer.

14. The method of claim 10 wherein the alphanumeric representation comprises a name of the selected candidate geographic location.

15. The method of claim 9 wherein the geographic information includes all of a plurality of locations described in the text.
